(19) Europäisches Patentamt
European Patent Office
Office européen des brevets

(11) **EP 4 671 074 A1**

(12) **EUROPÄISCHE PATENTANMELDUNG**

(43) Veröffentlichungstag:
**31.12.2025 Patentblatt 2026/01**

(21) Anmeldenummer: **25184100.3**

(22) Anmeldetag: **20.06.2025**

(51) Internationale Patentklassifikation (IPC):
**B60W 50/00** $^{(2006.01)}$ **B60W 40/08** $^{(2012.01)}$

(52) Gemeinsame Patentklassifikation (CPC):
**B60W 40/08;** B60W 2050/0052; B60W 2510/202;
B60W 2510/205; B60W 2520/10; B60W 2520/14;
B60W 2555/20

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **24.06.2024 DE 102024205848**

(71) Anmelder: **VOLKSWAGEN AG**
**38440 Wolfsburg (DE)**

(72) Erfinder:
• **Kallmeyer, Felix**
 **38440 Wolfsburg (DE)**
• **Münning, Daniel**
 **38440 Wolfsburg (DE)**
• **Kaste, Jonas**
 **38440 Wolfsburg (DE)**
• **Stahl, Felix**
 **38440 Wolfsburg (DE)**

(54) **VERFAHREN UND VORRICHTUNG ZUM ERKENNEN EINES HANDS-OFF-ZUSTANDS AN EINEM LENKRAD EINES FAHRZEUGS**

(57)  Die Erfindung betrifft ein Verfahren zum Erkennen eines Hands-Off-Zustands (6) an einem Lenkrad (51) eines Fahrzeugs (50), wobei mindestens eine Lenkungsgröße (4) an dem Lenkrad (51) erfasst wird, wobei die erfasste mindestens eine Lenkungsgröße (4) einem trainierten Maschinenlernmodell (5) als Eingangsdaten (10) zugeführt wird, wobei das Maschinenlernmodell (5) darauf trainiert ist, einen Hands-Off-Zustand (6) ausgehend von zumindest der erfassten mindestens einen Lenkungsgröße (4) zu erkennen und eine zugehörig geschätzte Wahrscheinlichkeit ($y_t$) als Ausgangsdaten (20) auszugeben, wobei die ausgegebene Wahrscheinlichkeit ($y_t$) über eine vorgegebene Anzahl von Zeitschritten mittels eines parametrierbaren Filters (8) gefiltert wird und ein Ergebnis ($Y_t$) als Zustandsgröße (30) für den Hands-Off-Zustand (6) ausgegeben wird, wobei Parameter (40) des parametrierbaren Filters (8) ausgehend von einem aktuellen Kontext (40) festgelegt und/oder ausgewählt werden. Ferner betrifft die Erfindung eine Vorrichtung (1) zum Erkennen eines Hands-Off-Zustands (6) an einem Lenkrad (51) eines Fahrzeugs (50).

Fig. 1

**Beschreibung**

Die Erfindung betrifft ein Verfahren und eine Vorrichtung zum Erkennen eines Hands-Off-Zustands an einem Lenkrad eines Fahrzeugs.

In Fahrzeugen werden zur Überwachung einer Fahreraktivität Sensoren, wie z.B. ein kapazitives Lenkrad, eingesetzt. Ein solches Lenkrad erkennt eine Berührung oder Nichtberührung ("Hands-Off") des Lenkrades durch den Fahrer mittels eines kapazitiven Sensors. Ein Ergebnis wird nutzenden Funktionen, wie z.B. einem Längs- und/oder Querführungsassistenzsystem, übermittelt. Aus der Berührung der Hände am Lenkrad kann auf eine Fahreraktivität und auf eine Aufmerksamkeit des Fahrers geschlossen werden. Es kann beispielsweise vorgesehen sein, den Fahrer darauf hinzuweisen, die Hände an das Lenkrad zu legen, sofern erkannt wird, dass die Hände während einer Querführung für eine vorgegebene Zeit nicht am Lenkrad waren.

Um zusätzliche Kosten für einen kapazitiven Sensor im Lenkrad zu sparen, ist es bekannt, die Fahreraktivität mit Hilfe von Maschinenlernmodellen, insbesondere mit Hilfe von künstlichen Neuronalen Netzen, ausgehend von einem am Lenkrad erfassten Drehmoment (Handmoment) zu überwachen. Ein solches Verfahren ist beispielsweise aus der DE 10 2019 211 016 A1 bekannt.

Eine große Herausforderung von lenkmomentbasierten Erkennungen besteht darin, im gemessenen (verrauschten) Lenkmoment das vom Fahrer induzierte Lenkmoment zu identifizieren. Viele Faktoren können zu einem verrauschten Lenkmoment führen, insbesondere eine Position des Sensors (dieser bildet in der Regel einen Teil des Lenkgetriebes bzw. der Lenkunterstützung, wodurch über die Elastizitäten der Lenksäule in Verbindung mit dem Lenkrad ein drehschwingungsfähiges System entsteht, dessen Eigendynamik die präzise Messung des durch den Fahrer induzierten Moments erschwert); eine Stärke der Reibung im Lenksystem; eine Rückanregung aus der Straße durch Unebenheiten; ein Eigengewicht des Lenkrads / des Lenksystems; eine Vibration des Lenkrads durch eine Assistenzfunktion (z.B. durch eine haptische Rückkopplung beim Verlassen der Fahrbahn).

Zudem können sich die Charakteristiken (die zur Hands-Off-Erkennung genutzt werden) des gemessen Lenkmoments durch äußere Einflüsse verändern, z.B. durch eine Temperatur, einen Beladungszustand des Fahrzeugs, das Vorhandensein eines Anhängers, einen Reifentyp und/oder einen Zustand des Reifens, eine Lenksystemveränderung über die Lebensdauer, eine Fahrbahn-Steigung/Neigung/Schräglage usw.

Zudem können auch Eigenschaften der Hand des Fahrers und eine Handposition (Griff) Einfluss auf die Sensitivität der Erkennung haben. Eine große, breite Hand prägt tendenziell mehr Reibung auf als eine kleine, schmale Hand; das gleiche gilt für den Fall, in dem das Lenkrad nur mit wenigen Fingern umgriffen wird. Auch eine Feuchtigkeit der Handinnenfläche hat einen Einfluss.

Für eine möglichst robuste Erkennung des Hands-Off-Zustands ist es insbesondere nötig, dass alle genannten Einflüsse und Szenarien in den Trainingsdaten vorhanden sind. Dies ist in der Praxis jedoch nur schwer möglich, da bereits die Eingangsdaten einen sehr großen Dimensionsraum aufspannen.

Der Erfindung liegt die Aufgabe zu Grunde, ein Verfahren und eine Vorrichtung zum Erkennen eines Hands-Off-Zustands an einem Lenkrad eines Fahrzeugs, insbesondere im Hinblick auf eine Robustheit der Erkennung des Hands-Off-Zustands, zu verbessern.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Erkennen eines Hands-Off-Zustands an einem Lenkrad eines Fahrzeugs zur Verfügung gestellt, wobei mindestens eine Lenkungsgröße an dem Lenkrad erfasst wird, wobei die erfasste mindestens eine Lenkungsgröße einem trainierten Maschinenlernmodell als Eingangsdaten zugeführt wird, wobei das Maschinenlernmodell darauf trainiert ist, einen Hands-Off-Zustand ausgehend von zumindest der erfassten mindestens einen Lenkungsgröße zu erkennen und eine zugehörig geschätzte Wahrscheinlichkeit als Ausgangsdaten auszugeben, wobei die ausgegebene Wahrscheinlichkeit über eine vorgegebene Anzahl von Zeitschritten mittels eines parametrierbaren Filters gefiltert wird und ein Ergebnis als Zustandsgröße für den Hands-Off-Zustand ausgegeben wird, wobei Parameter des parametrierbaren Filters ausgehend von einem aktuellen Kontext festgelegt und/oder ausgewählt werden.

Ferner wird insbesondere eine Vorrichtung zum Erkennen eines Hands-Off-Zustands an einem Lenkrad eines Fahrzeugs geschaffen, umfassend mindestens einen Lenkungsgrößensensor, der eingerichtet ist zum Erfassen von mindestens einer Lenkungsgröße an dem Lenkrad, und eine Datenverarbeitungseinrichtung, wobei die Datenverarbeitungseinrichtung dazu eingerichtet ist, die erfasste mindestens eine Lenkungsgröße zu erhalten, ein trainiertes Maschinenlernmodell bereitzustellen und die erfasste mindestens eine Lenkungsgröße dem trainierten Maschinenlernmodell als Eingangsdaten zuzuführen, wobei das Maschinenlernmodell darauf trainiert ist, einen Hands-Off-Zustand ausgehend von zumindest der erfassten mindestens einen Lenkungsgröße zu erkennen und eine zugehörig geschätzte Wahrscheinlichkeit als Ausgangsdaten auszugeben, ferner die ausgegebene Wahrscheinlichkeit über eine vorgegebene Anzahl von Zeitschritten mittels eines parametrierbaren Filters zu filtern und ein Ergebnis als Zustandsgröße für den Hands-Off-Zustand auszugeben, und Parameter des parametrierbaren Filters ausgehend von einem aktuellen Kontext festzulegen und/oder auszuwählen.

Das Verfahren und die Vorrichtung ermöglichen es, einen Hands-Off-Zustand zuverlässiger zu erkennen. Dies wird erreicht, indem eine von einem auf das Erkennen des Hands-Off-Zustands trainierten Maschinenlernmodell geschätzte Wahrscheinlichkeit mittels eines parametrierbaren Filters gefiltert wird. Es ist vorgesehen, dass die Parameter des parametrierbaren Filters ausgehend von einem aktuellen Kontext, in dem das Fahrzeug sich befindet, festgelegt und/oder ausgewählt werden. Mit anderen Worten: Es werden insbesondere unterschiedliche Parametrierungen für verschiedene Kontexte verwendet, das heißt, insbesondere je nach Kontext angepasste Parameter. Der Vorteil ist, dass nicht zwingend alle Kontexte in den Trainingsdaten, mit denen das Maschinenlernmodell trainiert wird, vorhanden sein oder unterschiedliche (angepasste) Maschinenlernmodelle trainiert werden müssen. Das unterschiedliche Verhalten in den Ausgangsdaten des trainierten Maschinenlernmodells wird hierbei durch eine entsprechend angepasste Filterung berücksichtigt, das heißt, indem für den jeweils vorliegenden Kontext zugehörige Parameter für den parametrierbaren Filter festgelegt und/oder ausgewählt werden. Somit kann trotz eines breiten Spektrums von Kontexten die benötigte Zuverlässigkeit und Robustheit bei gleichzeitig guter Sensitivität beim Erkennen des Hands-Off-Zustands bereitgestellt werden.

Ein aktueller Kontext kann zumindest teilweise mit Hilfe von mindestens einem Sensor erfasst und/oder bestimmt werden. Ferner kann ein aktueller Kontext zumindest teilweise auch mittels abgefragter und/oder erhaltener Informationen bestimmt werden. Beispielsweise kann vorgesehen sein, Fahrzeugdaten bei einer Fahrzeugsteuerung abzurufen, beispielsweise über einen CAN-Bus.

Die Parameter für den parametrierbaren Filter können beispielsweise mit Hilfe von Expertenwissen für die einzelnen Kontexte festgelegt und/oder gewählt werden. Beispielsweise kann vorgesehen sein, dass ausgehend von der Kenntnis, dass bei einer Geradeausfahrt weniger Handmoment auf das Lenkrad aufgeprägt wird als in einer Kurvenfahrt, ein Wahrscheinlichkeitsschwellwert für das Erkennen des Hands-Off-Zustands in diesem Kontext anders, insbesondere größer, gewählt wird.

Es kann jedoch auch vorgesehen sein, die Parameter für den parametrierbaren Filter datengetrieben für unterschiedliche Kontexte zu bestimmen. Hierzu wird das fertig trainierte Maschinenlernmodell auf im Feld und/oder im Rahmen von Simulationen für jeweils bekannte Kontexte gesammelte Daten angewendet, wobei zu den Daten stets die Grundwahrheit (also der real vorliegende Hands-Off-Zustand) bekannt ist, beispielsweise weil dieser mittels einer Sensorik und/oder mittels zugehöriger Kamerabilder vom Lenkrad eindeutig bestimmt werden kann. Ausgehend von diesen Daten können die Parameter des parametrierbaren Filters für jeden Kontext derart verändert werden, dass eine für mehrere Zeitschritte geschätzte Wahrscheinlichkeit des trainierten Maschinenlernmodells nach der Filterung mit der bekannten Grundwahrheit übereinstimmt oder eine Differenz zu dieser zumindest minimiert ist. Insbesondere kann hierdurch eine Häufigkeit von Falscherkennungen ("false positives") in Bezug auf das Erkennen des Hands-Off-Zustands verringert werden.

Es kann vorgesehen sein, dass die jeweils für unterschiedliche Ausprägungen des Kontextes bestimmten Parameter in einer Nachschlagetabelle (Look-Up-Tabelle) hinterlegt sind und bei Bedarf für den jeweils vorliegenden Kontext aus dieser abgerufen werden. Ferner können auch mehrdimensionale Kennfelder hinterlegt sein, in denen die unterschiedlichen Ausprägungen des Kontextes jeweils mit den jeweils bestimmten Parametern verknüpft sind. Alternativ kann auch vorgesehen sein, die Parameter ausgehend von den Ausprägungen des Kontextes mittels eines auf Basis der (wie voranstehend beschrieben) bestimmten Parameter trainierten Maschinenlernmodells zu schätzen.

Die vorgegebene Anzahl von Zeitschritten kann grundsätzlich auch gleich 1 sein. Auf diese Weise kann insbesondere ein einzelner Wahrscheinlichkeitswert nachbearbeitet werden. Bevorzugt ist die Anzahl der Zeitschritte aber größer als 1.

Eine Lenkungsgröße ist insbesondere eine Größe, welche einen aktuellen Zustand des Lenkrads repräsentiert und/oder beschreibt. Eine Lenkungsgröße ist insbesondere ein Drehmoment, das insbesondere mittels eines Drehmomentsensors am Lenkrad erfasst wird. Grundsätzlich kann eine Lenkungsgröße aber auch eine andere direkt oder indirekt am Lenkrad erfasste Größe sein. Beispielsweise kann vorgesehen sein, einen Strom an einer elektrischen Maschine am Lenkrad zu erfassen und als Lenkungsgröße zu verwenden. Das Erkennen des Hands-Off-Zustands kann ausschließlich ausgehend von der am Lenkrad erfassten Lenkungsgröße, insbesondere einem erfassten Drehmoment, erfolgen. Es ist jedoch insbesondere auch möglich, dass dem Maschinenlernmodell weitere (Lenkungs-)Größen, welche am Lenkrad erfasst werden (z.B. ein Lenkradwinkel und/oder eine Lenkradwinkelgeschwindigkeit etc.) zugeführt werden und das trainierte Maschinenlernmodell den Hands-Off-Zustand unter Berücksichtigung auch dieser weiteren Größe(n) erkennt. Größen, die nicht am Lenkrad erfasst werden, wie beispielsweise eine Fahrzeuggeschwindigkeit, eine Querbeschleunigung, eine Gierrate, Radticks, Dämpferinformationen und/oder sonstige Fahrdynamikgrößen, ferner Witterungs- und/oder Situationsdaten etc., können direkt und/oder im Rahmen des Kontextes berücksichtigt werden und/oder dem trainierten Maschinenlernmodell ebenfalls als Eingangsdaten zugeführt werden. Insbesondere ist jedoch kein kapazitiv arbeitender Sensor am Lenkrad vorgesehen.

Es kann vorgesehen sein, dass im Rahmen des Erkennens des Hands-Off-Zustands auch ein Hands-On-Zustand erkannt wird. Dies erfolgt beispielsweise durch einen Vergleich der ausgegebenen Wahrscheinlichkeit bzw. des Ergebnisses des Filters mit einem entsprechenden Schwellwert, dessen Unterschreiten zum Erkennen des Hands-On-Zustands verwendet wird.

Ein Hands-Off-Zustand ist insbesondere ein Zustand, in dem keine Berührung des Lenkrads durch den Fahrer erfolgt. Insbesondere ist keiner der Finger des Fahrers in Berührung mit dem Lenkrad. Das Erkennen des Hands-Off-Zustands kann insbesondere das Bereitstellen eines Hands-Off-Zustandssignals umfassen. Dieses umfasst beispielsweise eine Hands-Off-Wahrscheinlichkeit oder kodierte Signale für die Zustände "Hands-Off erkannt" und "Hands-Off nicht erkannt". Ein Hands-On-Zustand ist insbesondere ein Zustand, in dem eine Berührung des Lenkrads durch den Fahrer erfolgt. Es kann auch ein Hands-On/Hands-Off-Zustand bereitgestellt werden, beispielsweise als Hands-On/-Hands-Off-Zustandssignal mit insbesondere zumindest zwei Signalzuständen (z.B. "Hands-On erkannt" oder "Hands-Off erkannt").

Das Maschinenlernmodell kann insbesondere ein oder mehrere Neuronales Netze umfassen. Das oder die Neuronalen Netze können insbesondere mehrere innere Schichten umfassen. Das Maschinenlernmodell umfasst insbesondere ein oder mehrere künstliche rekurrente Neuronale Netze, wobei zu jedem Zeitpunkt t die Eingangsdaten $X_t$ verarbeitet werden und eine Hands-Off-Wahrscheinlichkeit $y_t$ in [0,1] ausgegeben wird: $y_t = p(x_t \mid x_{0:t-1})$. Hierbei besitzt ein rekurrentes Neuronales Netz insbesondere ein sogenanntes Gedächtnis h, in dem Informationen aus vorherigen Zeitschritten abgespeichert sind und das für die Ausgabe beim aktuellen Zeitschritt genutzt werden kann.

Während einer Trainingsphase wird das Maschinenlernmodell trainiert. Dies erfolgt mittels Trainingsdaten, die Paare umfassen, in denen Daten der mindestens einen Lenkungsgröße, insbesondere Drehmomentdaten, mit jeweils einem bekannten Hands-Off-Zustand (als Grundwahrheit) gepaart sind. Die Daten der mindestens einen Lenkungsgröße, insbesondere die Drehmomentdaten, sind insbesondere Zeitreihen von der am Lenkrad erfassten mindestens einen Lenkungsgröße, insbesondere Zeitreihen von am Lenkrad erfassten Drehmomenten. Die Trainingsdaten werden insbesondere mit Hilfe von Testfahrten und/oder in Simulatoren für unterschiedliche Kontexte gewonnen. Grundsätzlich kann das Bereitstellen von Trainingsdaten hierbei gemäß dem in der DE 10 2019 211 016 A1 beschriebenen Verfahren erfolgen. Das Trainieren wird ansonsten in an sich bekannter Weise durchgeführt, insbesondere im Wege des überwachten Lernens. Insbesondere werden beim Training im Wege der Rückwärtsprojektion die Parameter des Maschinenlernmodells (insbesondere die Gewichte) angepasst, solange bis ein berechneter Fehler der Ausgabe zur Grundwahrheit unterhalb eines vorgegebenen Schwellwertes liegt.

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Datenverarbeitungseinrichtung umfasst insbesondere mindestens eine Recheneinrichtung und mindestens einen Speicher. Ferner kann die Datenverarbeitungseinrichtung mindestens eine Kommunikationsschnittstelle zur Kommunikation aufweisen.

In einer Ausführungsform ist vorgesehen, dass für jeden Zeitschritt ein Abstand der ausgegebenen Wahrscheinlichkeit zu einem vorgegebenen Wahrscheinlichkeitsschwellwert bestimmt wird, wobei mittels des parametrierbaren Filters eine gewichtete Summe der bestimmten Abstände bestimmt und als Ergebnis bereitgestellt wird. Durch das Verwenden des Abstands fließen Ausgaben des trainierten Maschinenlernmodells, bei denen das trainierte Maschinenlernmodell eine größere Wahrscheinlichkeit (= ein größerer Abstand zum vorgegebenen Wahrscheinlichkeitsschwellwert) schätzt, stärker in das Ergebnis ein als bei Ausgaben mit geringerer Wahrscheinlichkeit (= ein kleinerer Abstand zum vorgegebenen Wahrscheinlichkeitsschwellwert). Mit anderen Worten: Ausgaben, bei denen sich das trainierte Maschinenlernmodell "sicherer" ist, fließen stärker ein als Ausgaben, bei denen das trainierte Maschinenlernmodell sich "unsicherer" ist. Durch das gewichtete Summieren kann dieser Effekt noch verstärkt werden, wenn entsprechende Gewichte gewählt werden. Der vorgegebene Wahrscheinlichkeitsschwellwert und/oder die Gewichte beim Summieren werden insbesondere als Parameter des parametrierbaren Filters kontextabhängig festgelegt und/oder gewählt.

In einer weiterbildenden Ausführungsform ist vorgesehen, dass der gewichtete Abstand wie folgt bestimmt wird:

$$\gamma_t = \begin{cases} \left(\dfrac{y_t - \lambda}{\lambda}\right)^{\beta} & \text{wenn } y_t \geq \lambda \\[2mm] -\left(\dfrac{y_t - \lambda}{1 - \lambda}\right)^{\beta} & \text{sonst} \end{cases}$$

wobei das Ergebnis $Y_t$ des Filters wie folgt bestimmt wird:

$$Y_t = \sum_{i=0}^{T} \frac{\gamma_{t-i}}{T}$$

wobei $y_t$ die ausgegebene Wahrscheinlichkeit in [0,1] für das Vorliegen des Hands-Off-Zustands ist, wobei $T$ die Anzahl Zeitschritte im betrachteten Filterfenster bezeichnet, wobei $\lambda$ den vorgegebenen Wahrscheinlichkeitsschwellwert bezeichnet, wobei $\beta$ eine Gewichtung mit $\beta \geq 0$ bezeichnet. Die Gewichtung $\beta$ erlaubt es, den Effekt des Abstandes zu verstärken ($\beta > 1$) oder komplett zu vernachlässigen ($\beta = 0$, das heißt, alle Summanden sind gleichgewichtet, unabhängig vom Abstand).

In einer Ausführungsform ist vorgesehen, dass zum Erkennen des Hands-Off-Zustands ein Ergebnis des Filters mit einem vorgegebenen Erkennungsschwellwert verglichen wird, wobei der Hands-Off-Zustand als vorliegend erkannt wird, wenn das Ergebnis den vorgegebenen Erkennungsschwellwert erreicht oder überschreitet. Hierdurch kann zum Erkennen des Hands-Off-Zustands ausgehend von dem Ergebnis des Filters eine Entscheidung getroffen werden, bei der eine Aussage darüber getroffen wird, ob der Hands-Off-Zustands vorliegt oder nicht. Gemäß den oben angegebenen Formeln wird insbesondere überprüft, ob:

$$Y_t \geq \tau$$

erfüllt ist oder nicht, wobei $\tau$ den Erkennungsschwellwert bezeichnet. Ist der Erkennungsschwellwert erreicht oder überschritten, so wird als Ergebnis der Zustands "Hands-Off" festgestellt und ausgegeben. Im Sinne dieser Offenbarung ist der Erkennungsschwellwert insbesondere auch ein Parameter des Filters.

In einer Ausführungsform ist vorgesehen, dass der vorgegebene Erkennungsschwellwert ausgehend von einem aktuellen Kontext festgelegt und/oder ausgewählt wird. Hierdurch kann eine Sensitivität der Erkennung in Abhängigkeit von dem aktuellen Kontext eingestellt werden.

In einer Ausführungsform ist vorgesehen, dass die Parameter in Abhängigkeit von einem aktuell vorliegenden Hands-Off-Zustand gewählt werden. Hierdurch kann eine Hysterese beim Erkennen des Hands-Off-Zustands geschaffen werden. Insbesondere können bei Vorliegen des Hands-Off-Zustands andere Parameter gewählt werden als bei Nichtvorliegen des Hands-Off-Zustands oder einem erkannten Hands-On-Zustand. Dies ermöglicht es insbesondere, nach Erkennen des Hands-Off-Zustands bei einer Rückkehr zu einem Zustand, in dem Hands-Off nicht (mehr) vorliegt, eine größere Sicherheitsmarge beim Erkennen zu verwenden als beim Erkennen des Hands-Off-Zustands. Eine solches Hystereseverhalten kann beispielsweise mittels einer Zustandsmaschine (engl. state machine) realisiert werden.

In einer Ausführungsform ist vorgesehen, dass ein Kontext mindestens eine der folgenden Größen umfasst:

- eine Temperatur,
- einen Beladungszustand des Fahrzeugs,
- einen Anhängerzustand,
- einen Reifentyp,
- einen Reifenzustand,
- einen Lenksystemzustand,
- einen Fahrbahnverlauf,
- einen Fahrbahnzustand,

- eine Fahrbahnneigung.

In einer Ausführungsform ist vorgesehen, dass im Rahmen des Kontextes ein Eingriffszustand (z.B. Assistenzsystem aktiv oder Assistenzsystem passiv) eines Assistenzsystems des Fahrzeugs und/oder eine Funktion des Assistenzsystems des Fahrzeugs berücksichtigt wird. Hierdurch kann beispielsweise ein Eingriff und/oder eine Beeinflussung des Lenksystems durch ein Assistenzsystem beim Erkennen des Hands-Off-Zustands berücksichtigt werden. Insbesondere können Parameter des parametrierbaren Filters entsprechend geändert werden. Ein Beispiel für einen solchen Eingriff bzw. eine Beeinflussung ist ein Assistenzsystem, das eine Lenkradvibration am Lenkrad hervorruft, um die Aufmerksamkeit des Fahrers zu erregen, beispielsweise, weil eine seitliche Fahrbahnmarkierung vom Fahrzeug überfahren wird. Eine solche Lenkradvibration überlagert sich mit dem Handmoment des Fahrers am Lenkrad und beeinflusst einen Wert der erfassten Lenkungsgröße. Um eine Fehlerkennung zu verhindern, werden während des Vorliegens einer solchen Lenkradvibration andere Parameter für den parametrierbaren Filter gewählt. Insbesondere können der vorgegebene Wahrscheinlichkeitsschwellwert und/oder der vorgegebene Erkennungsschwellwert geändert werden, beispielsweise abgesenkt werden. Zum Ändern der Parameter und/oder zum Auswählen von geänderten Parametern wird insbesondere der Eingriffszustand und/oder die Funktion des Assistenzsystems abgefragt und/oder erhalten, beispielsweise vom Assistenzsystem und/oder einer Fahrzeugsteuerung.

In einer Ausführungsform ist vorgesehen, dass der Kontext ein Fahrerprofil umfasst. Hierdurch können Eigenschaften des Fahrers berücksichtigt werden, wie beispielsweise eine Handgröße, eine Feuchtigkeit der Handinnenfläche und/oder eine Griffstärke beim Umfassen des Lenkrades. Die Eigenschaften werden in Form jeweils gewählter Parameter des parametrierbaren Filters berücksichtigt. Beispielsweise können der Wahrscheinlichkeitsschwellwert und/oder der Erkennungsschwellwert bei einem Fahrer mit einer kleinen Hand und/oder einer geringeren Griffstärke anders, insbesondere größer, gewählt werden, als bei einem Fahrer mit einer großen Hand und/oder einer größeren Griffstärke. Ein größerer Wahrscheinlichkeitsschwellwert und/oder ein größerer Erkennungsschwellwert führen dazu, dass das Erkennen des Hands-Off-Zustands erst ab einem größeren Wahrscheinlichkeitswert erfolgt, sodass Schwankungen, die durch eine kleinere Hand und/oder eine geringere Griffstärke hervorgerufen werden, nicht (jedes Mal fälschlicherweise) zu einem Erkennen des Hands-Off-Zustands führen. Bei einer großen Hand und/oder einer größeren Griffstärke können der Wahrscheinlichkeitsschwellwert und/oder der Erkennungsschwellwert entsprechend niedriger gewählt werden.

In einer Ausführungsform ist vorgesehen, dass eine Art und/oder eine Filterfunktion des parametrierbaren Filters ausgehend von dem aktuellen Kontext festgelegt und/oder ausgewählt werden. Hierdurch kann die Art und/oder die Filterfunktion selbst in Abhängigkeit von dem Kontext gewählt werden. Beispielsweise kann vorgesehen sein, eine der folgenden Filterfunktionen zu verwenden und/oder zur Auswahl vorzuhalten: die voranstehend beschriebene gewichtete Summe von Abständen, einen kleinsten Wert (min) innerhalb einer vorgegebenen Anzahl von Zeitschritten, einen größten Wert (max) innerhalb einer vorgegebenen Anzahl von Zeitschritten, Auswertung von Perzentilen über eine vorgegebene Anzahl von Zeitschritten (zum Erkennen des Hands-Off-Zustands müssen z.B. die jeweiligen Wahrscheinlichkeitswerte eines vorgegebenen Perzentils von Zeitschritten oberhalb eines Schwellwertes liegen). Ferner kann auch vorgesehen sein, komplexere Filterfunktionen zu verwenden, beispielsweise eine Zustandsmaschine (engl. state machine), die beispielsweise Schwellwerte überwacht. Mittels einer solchen Zustandsmaschine kann beispielsweise auch ein Hystereseverhalten umgesetzt werden, bei dem für einen Wechsel von Hands-On zu Hands-Off andere Parameter verwendet werden als bei einem Wechsel von Hands-Off zu Hands-On.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird ferner ein Lenksystem geschaffen, umfassend eine Vorrichtung nach einer der beschriebenen Ausführungsformen.

Weiter wird insbesondere auch ein Fahrzeug geschaffen, umfassend ein Lenksystem und/oder eine Vorrichtung nach einer der beschriebenen Ausführungsformen.

Nachfolgend wird die Erfindung anhand bevorzugter Ausführungsbeispiele unter Bezugnahme auf die Figuren näher erläutert. Hierbei zeigen:

Fig. 1 eine schematische Darstellung einer Ausführungsform der Vorrichtung zum Erkennen eines Hands-Off-Zustands an einem Lenkrad eines Fahrzeugs;

Fig. 2 eine schematische Darstellung zur Verdeutlichung einer Ausführungsform der Vorrichtung und des Verfahrens.

Fig. 3 eine schematische Darstellung zur Verdeutlichung einer weiteren Ausführungsform der Vorrichtung und des Verfahrens.

Fig. 4 eine schematische Darstellung zur Verdeutlichung einer weiteren Ausführungsform der Vorrichtung und des Verfahrens.

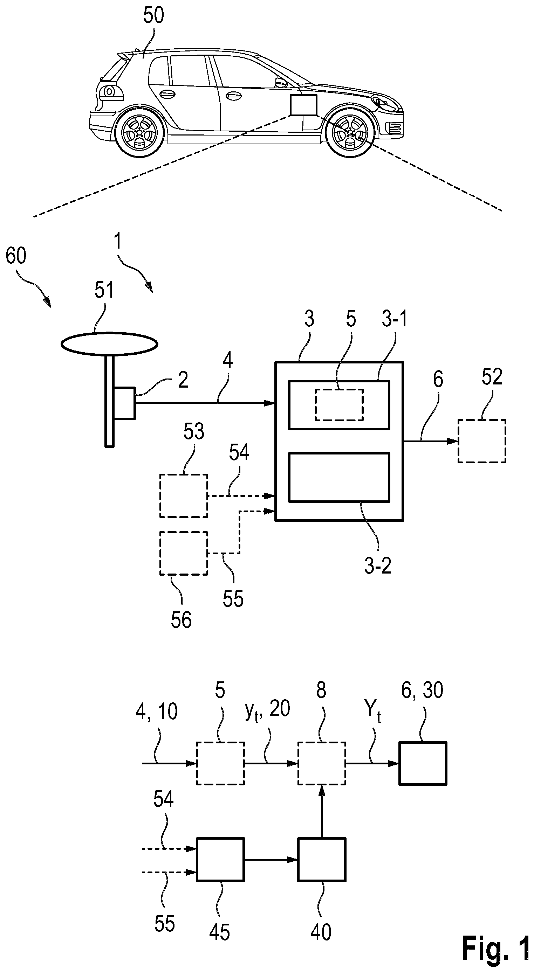

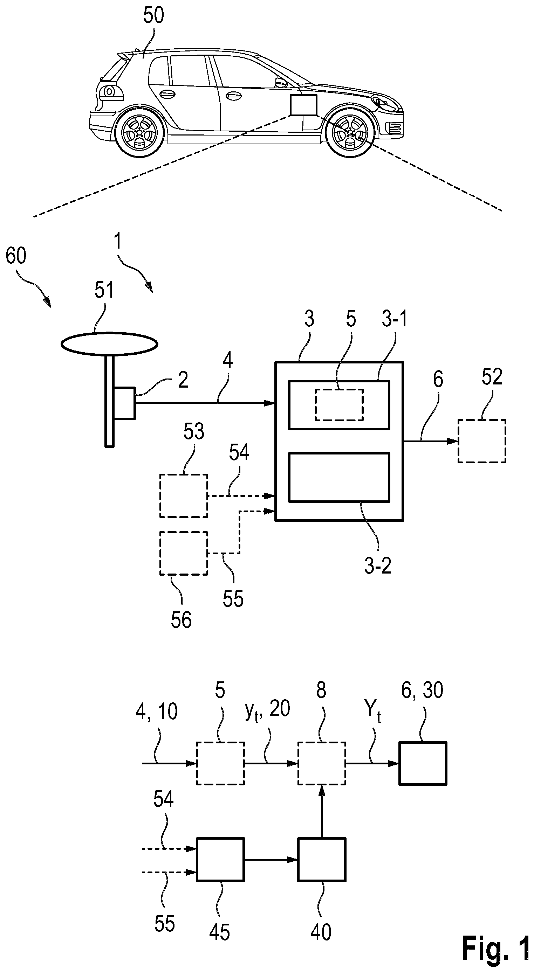

Die Fig. 1 zeigt eine schematische Darstellung einer Ausführungsform der Vorrichtung 1 zum Erkennen eines Hands-Off-Zustands 6 an einem Lenkrad 51. Die Vorrichtung 1 ist insbesondere in einem Fahrzeug 50 angeordnet und dort Teil eines Lenksystems 60. Das in dieser Offenbarung beschriebene Verfahren wird nachfolgend anhand der Vorrichtung 1 verdeutlicht und näher erläutert.

Die Vorrichtung 1 umfasst einen Lenkungsgrößensensor 2 und eine Datenverarbeitungseinrichtung 3. Der Lenkungsgrößensensor 2 ist dazu eingerichtet, eine Lenkungsgröße 4 an dem Lenkrad 51 des Fahrzeugs 50 zu erfassen. Der Lenkungsgrößensensor 2 ist beispielsweise ein Drehmomentsensor und die Lenkungsgröße 4 ein Drehmoment. Grundsätzlich können alternativ oder zusätzlich weitere Lenkungsgrößensensoren vorgesehen sein, die weitere Lenkungsgrößen erfassen. Die Vorrichtung 1 kann zur Kommunikation eine Kommunikationsschnittstelle (nicht gezeigt) umfassen.

Die Datenverarbeitungseinrichtung 3 umfasst eine Recheneinrichtung 3-1 und einen Speicher 3-2. Die Recheneinrichtung 3-1 ist dazu eingerichtet, für das Durchführen von Maßnahmen des Verfahrens notwendige Rechenoperationen durchzuführen und kann hierzu auf in dem Speicher 3-2 hinterlegte Daten zugreifen.

Die Datenverarbeitungseinrichtung 3 ist dazu eingerichtet, die erfasste mindestens eine Lenkungsgröße 4 zu erhalten, ein trainiertes Maschinenlernmodell 5 bereitzustellen und die erfasste mindestens eine Lenkungsgröße 4 dem trainierten Maschinenlernmodell 5 als Eingangsdaten 10 zuzuführen.

Das Maschinenlernmodell 5 ist darauf trainiert, den Hands-Off-Zustand 6 ausgehend von zumindest der erfassten mindestens einen Lenkungsgröße 4 zu erkennen und eine zugehörig geschätzte Wahrscheinlichkeit $y_t$ als Ausgangsdaten 20 auszugeben. Die ausgegebene Wahrscheinlichkeit $y_t$ wird über eine vorgegebene Anzahl von Zeitschritten mittels eines parametrierbaren Filters 8 gefiltert und ein Ergebnis $Y_t$ wird als Zustandsgröße 30 für den Hands-Off-Zustand 6 ausgegeben. Parameter 40 des parametrierbaren Filters 8 werden hierbei ausgehend von einem aktuellen Kontext 45 festgelegt und/oder ausgewählt.

Zum Ermitteln und/oder Bestimmen des aktuellen Kontextes 45 kann vorgesehen sein, dass die Datenverarbeitungseinrichtung 3 Messgrößen 54 von mindestens einem Sensor 53 erhält und/oder Fahrzeugparameter 55 bei einer Fahrzeugsteuerung 56 abfragt.

Der Hands-Off-Zustand 6 (bzw. die diesen beschreibende Zustandsgröße 30) wird beispielsweise als Zustandssignal oder Zustandsinformation einem Steuergerät 52 des Fahrzeugs 50 zur weiteren Verarbeitung zugeführt. Das Steuergerät 52 kann beispielsweise ein Querführungsassistent oder ein anderes Assistenzsystem sein. Das Zustandssignal oder die Zustandsinformation kann beispielsweise eine Hands-Off-Wahrscheinlichkeit (z.B. den Wert von $Y_t$) beinhalten oder einen binären Zustandswert mit den beiden Zuständen "Hands-Off erkannt" und "Hands-Off nicht erkannt". Es kann hierzu ein Vergleich mit einem Erkennungsschwellwert erfolgen, wie die weiter unten beschrieben ist.

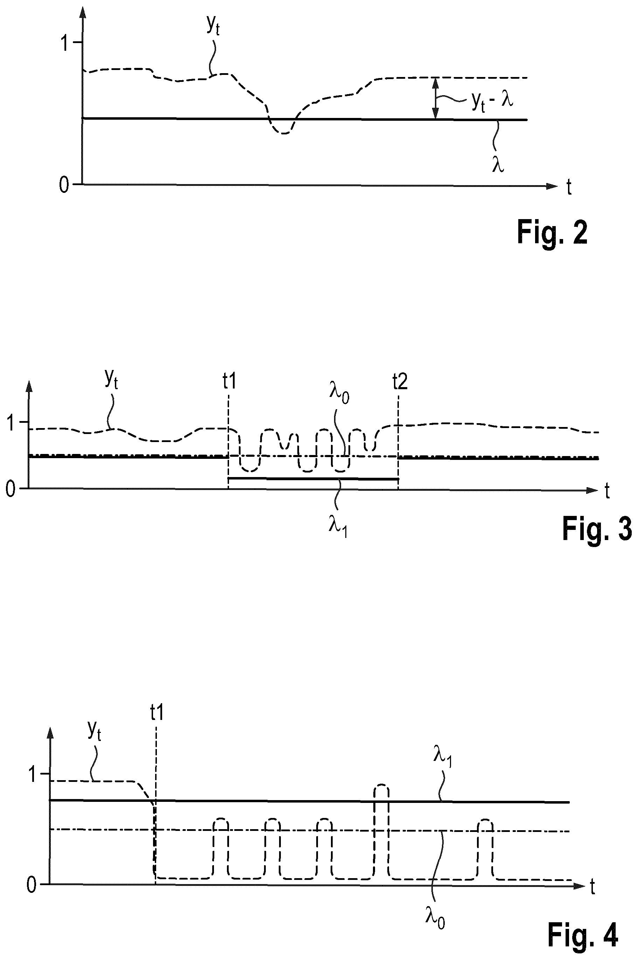

Die Fig. 2 zeigt eine schematische Darstellung zur Verdeutlichung einer Ausführungsform der Vorrichtung und des Verfahrens. Es ist bei dieser Ausführungsform vorgesehen, dass für jeden Zeitschritt ein Abstand $\gamma_t$ - $\lambda$ der ausgegebenen Wahrscheinlichkeit $y_t$ zu einem vorgegebenen Wahrscheinlichkeitsschwellwert $\lambda$ bestimmt wird, wobei mittels des parametrierbaren Filters 8 eine gewichtete Summe der bestimmten Abstände bestimmt und als Ergebnis $Y_t$ bereitgestellt wird.

Die Fig. 2 zeigt entlang einer Zeitachse t eine von dem trainierten Maschinenlernverfahren geschätzte Wahrscheinlichkeit $y_t$ für das Vorliegen eines Hands-Off-Zustands (bei einem Wert von 1 hat das trainierte Maschinenlernmodell einen Hands-Off-Zustand "sicher" erkannt, bei einem Wert von 0 liegt ein Hands-Off-Zustand "sicher nicht" vor bzw. es liegt "sicher" ein Hands-On-Zustand vor). Ferner zeigt die Fig. 2 den vorgegebenen Wahrscheinlichkeitsschwellwert $\lambda$.

Es kann weiterbildend vorgesehen sein, dass der gewichtete Abstand wie folgt bestimmt wird:

$$\gamma_t = \begin{cases} \left(\dfrac{y_t - \lambda}{\lambda}\right)^{\beta} & wenn \; y_t \geq \lambda \\[2em] -\left(\dfrac{y_t - \lambda}{1 - \lambda}\right)^{\beta} & sonst \end{cases}$$

wobei das Ergebnis $Y_t$ des Filters wie folgt bestimmt wird:

$$Y_t = \sum_{i=0}^{T} \frac{\gamma_{t-i}}{T}$$

wobei $y_t$ die ausgegebene Wahrscheinlichkeit in [0,1] für das Vorliegen des Hands-Off-Zustands ist, wobei T die Anzahl Zeitschritte im betrachteten Filterfenster bezeichnet, wobei $\lambda$ den vorgegebenen Wahrscheinlichkeitsschwellwert bezeichnet, wobei $\beta$ eine Gewichtung mit bezeichnet.

Es kann vorgesehen sein, dass zum Erkennen des Hands-Off-Zustands 6 ein Ergebnis $Y_t$ des Filters 8 mit einem vorgegebenen Erkennungsschwellwert $\tau$ verglichen wird, wobei der Hands-Off-Zustand 6 als vorliegend erkannt wird, wenn das Ergebnis $Y_t$ den vorgegebenen Erkennungsschwellwert $\tau$ erreicht oder überschreitet:

$$Y_t \geq \tau$$

Es kann weiterbildend vorgesehen sein, dass der vorgegebene Erkennungsschwellwert $\tau$ ausgehend von einem aktuellen Kontext 45 festgelegt und/oder ausgewählt wird.

Es kann vorgesehen sein, dass die Parameter 40 in Abhängigkeit von einem aktuell vorliegenden Hands-Off-Zustand 6 gewählt werden. Der aktuell vorliegende Hands-Off-Zustand 6 kann als Teil des Kontextes 45 berücksichtigt werden. Insbesondere kann vorgesehen sein, Schwellwerte für das Erkennen des Hands-Off-Zustands und eines Hands-On-Zustands unterschiedlich zu wählen.

Es kann vorgesehen sein, dass ein Kontext 45 mindestens eine der folgenden Größen umfasst:

- eine Temperatur,
- einen Beladungszustand des Fahrzeugs,
- einen Anhängerzustand,
- einen Reifentyp,
- einen Reifenzustand,
- einen Lenksystemzustand,
- einen Fahrbahnverlauf,
- einen Fahrbahnzustand,
- eine Fahrbahnneigung.

Die Fig. 3 zeigt eine schematische Darstellung zur Verdeutlichung einer weiteren Ausführungsform der Vorrichtung und des Verfahrens. Es ist bei dieser Ausführungsform vorgesehen, dass im Rahmen des Kontextes 45 ein Eingriffszustand eines Assistenzsystems des Fahrzeugs 50 und/oder eine Funktion des Assistenzsystems des Fahrzeugs 50 berücksichtigt wird. Die Fig. 3 zeigt hierzu entlang einer Zeitachse t eine von dem trainierten Maschinenlernverfahren geschätzte Wahrscheinlichkeit $y_t$ für das Vorliegen eines Hands-Off-Zustands. Ferner gezeigt sind ein normalerweise verwendeter Wahrscheinlichkeitsschwellwert $\lambda_0$. Bei diesem normalerweise verwendeten Wahrscheinlichkeitsschwellwert $\lambda_0$ würde die geschätzte Wahrscheinlichkeit $y_t$ in einem Zeitabschnitt zwischen den Zeitpunkten t1 und t2, in denen ein Eingriff eines Fahrerassistenzsystems in Form einer Lenkradvibration erfolgt, wiederholt unterhalb des Wahrscheinlichkeitsschwellwerts $\lambda_0$ liegen, das heißt, eine zuverlässige Erkennung des Hands-Off-Zustands wäre hierdurch beeinträchtigt, da es zu Oszillationen kommen kann. Um dies zu vermeiden, wird gemäß der Ausführungsform der zeitlich bezüglich eines Anfangs (t1) und eines Endes (t2) bekannte Eingriff des Assistenzsystems berücksichtigt, indem während dieses Eingriffs ein angepasster Wahrscheinlichkeitsschwellwerts $\lambda_1$ gewählt wird. Im vorliegenden Beispiel der Lenkradvibration ist der Wahrscheinlichkeitsschwellwerts $\lambda_1$ kleiner als der Wahrscheinlichkeitsschwellwert $\lambda_0$. Hierdurch kann das wiederholte Unter- und wieder Überschreiten des Wahrscheinlichkeitsschwellwertes verhindert werden. Nach dem Eingriff, das heißt, nach dem Zeitpunkt t2, wird insbesondere wieder der ursprüngliche Wahrscheinlichkeitsschwellwert $\lambda_0$ verwendet. Bei anderen Funktionen und/oder Assistenzsystemen kann entsprechend vorgegangen werden. Der Eingriffszustand, das heißt, insbesondere der Anfangszeitpunkt t1 und der Endzeitpunkt t2, kann beispielsweise bei dem Assistenzsystem und/oder bei einer Fahrzeugsteuerung abgefragt werden und/oder von dieser übermittelt werden. Die Art der Berücksichtigung kann auch ein Anpassen von anderen und/oder weiteren Parametern des parametrierbaren Filters umfassen. Der Eingriffszustand und/oder die Funktion des Assistenzsystems können als Teil des Kontextes berücksichtigt werden.

Die Fig. 4 zeigt eine schematische Darstellung zur Verdeutlichung einer weiteren Ausführungsform der Vorrichtung und des Verfahrens. Es ist bei dieser Ausführungsform vorgesehen, dass der Kontext ein Fahrerprofil umfasst. Die Fig. 4 zeigt hierzu entlang einer Zeitachse t eine von dem trainierten Maschinenlernverfahren geschätzte Wahrscheinlichkeit $y_t$ für das Vorliegen eines Hands-Off-Zustands (bei einem Wert von 1 hat das trainierte Maschinenlernmodell einen Hands-Off-Zustand sicher erkannt, bei einem Wert von 0 liegt ein Hands-Off-Zustand sicher nicht vor bzw. es liegt sicher ein Hands-On-Zustand vor). Ferner gezeigt sind ein normalerweise verwendeter Wahrscheinlichkeitsschwellwert $\lambda_0$. Es wird nun beispielhaft davon ausgegangen, dass aus dem Fahrerprofil hervorgeht, dass der Fahrer stets nur ein sehr kleines Handmoment auf das Lenkrad aufprägt, beispielsweise weil er nur kleine Hände hat und/oder nur einen geringe Griffstärke aufbringt. Bis zum Zeitpunkt t1 hat der Fahrer keine Hand am Lenkrad, sodass der Hands-Off-Zustand korrekt erkannt wird. Bei dem normalerweise verwendeten Wahrscheinlichkeitsschwellwert $\lambda_0$ würde die geschätzte Wahrscheinlichkeit $y_t$ jedoch in einem Zeitabschnitt, der nach dem Zeitpunkt t1 nachfolgt und in dem der Fahrer eine Hand am Lenkrad hat, wiederholt oberhalb des Wahrscheinlichkeitsschwellwerts $\lambda_0$ liegen, das heißt, eine Erkennung des Hands-Off-Zustands wäre hierdurch beeinträchtigt, da es zu Oszillationen kommen kann, welche dazu führen, dass ein Hands-Off-Zustand erkannt wird, obwohl der Fahrer eine Hand am Lenkrad hat. Um dies zu vermeiden, wird gemäß der Ausführungsform das Fahrerprofil, und im Beispiel insbesondere das stets nur kleine Handmoment, berücksichtigt, indem für dieses Fahrerprofil ein angepasster Wahrscheinlichkeitsschwellwerts $\lambda_1$ gewählt wird. Im vorliegenden Beispiel ist der Wahrscheinlichkeitsschwellwerts $\lambda_1$ größer als der Wahrscheinlichkeitsschwellwert $\lambda_0$, sodass das Erkennen weniger sensitiv ausgestaltet ist. Hierdurch kann das wiederholte Überschreiten des Wahrscheinlichkeitsschwellwertes verhindert werden.

Es kann vorgesehen sein, dass eine Art und/oder eine Filterfunktion des parametrierbaren Filters 8 (Fig. 1) ausgehend von dem aktuellen Kontext 45 festgelegt und/oder ausgewählt wird.

Bezugszeichenliste

| | |
|---|---|
| 1 | Vorrichtung |
| 2 | Lenkungsgrößensensor |
| 3 | Datenverarbeitungseinrichtung |
| 3-1 | Recheneinrichtung |
| 3-2 | Speicher |
| 4 | Lenkungsgröße |
| 5 | Maschinenlernmodell |
| 6 | Hands-Off-Zustand |
| 8 | parametrierbarer Filter |
| 10 | Eingangsdaten |
| 20 | Ausgangsdaten |
| 30 | Zustandsgröße |
| 40 | Parameter |
| 45 | Kontext |
| 50 | Fahrzeug |
| 51 | Lenkrad |
| 52 | Steuergerät |
| 53 | Sensor |
| 54 | Messgrößen |
| 55 | Fahrzeugparameter |
| 56 | Fahrzeugsteuerung |
| 60 | Lenksystem |
| t | Zeit |
| t1 | Zeitpunkt |
| t2 | Zeitpunkt |
| $\beta$ | Gewichtung |
| $\lambda$ | Wahrscheinlichkeitsschwellwert |
| $\lambda_0$ | normalerweise verwendeter Wahrscheinlichkeitsschwellwert |
| $\lambda_1$ | angepasster Wahrscheinlichkeitsschwellwert |
| $y_t$ | geschätzte Wahrscheinlichkeit |
| $Y_t$ | Ergebnis (Filter) |
| $y_t - \lambda$ | Abstand |

## Patentansprüche

1. Verfahren zum Erkennen eines Hands-Off-Zustands (6) an einem Lenkrad (51) eines Fahrzeugs (50),

   wobei mindestens eine Lenkungsgröße (4) an dem Lenkrad (51) erfasst wird,
   wobei die erfasste mindestens eine Lenkungsgröße (4) einem trainierten Maschinenlernmodell (5) als Eingangsdaten (10) zugeführt wird,
   wobei das Maschinenlernmodell (5) darauf trainiert ist, einen Hands-Off-Zustand (6) ausgehend von zumindest der erfassten mindestens einen Lenkungsgröße (4) zu erkennen und eine zugehörig geschätzte Wahrscheinlichkeit ($y_t$) als Ausgangsdaten (20) auszugeben, wobei die ausgegebene Wahrscheinlichkeit ($y_t$) über eine vorgegebene Anzahl von Zeitschritten mittels eines parametrierbaren Filters (8) gefiltert wird und ein Ergebnis ($Y_t$) als Zustandsgröße (30) für den Hands-Off-Zustand (6) ausgegeben wird,
   wobei Parameter (40) des parametrierbaren Filters (8) ausgehend von einem aktuellen Kontext (40) festgelegt und/oder ausgewählt werden.

2. Verfahren nach Anspruch 1, **dadurch gekenn-**

**zeichnet, dass** für jeden Zeitschritt ein Abstand ($\gamma_t$ - $\lambda$) der ausgegebenen Wahrscheinlichkeit ($y_t$) zu einem vorgegebenen Wahrscheinlichkeitsschwellwert ($\lambda$) bestimmt wird, wobei mittels des parametrierbaren Filters (8) eine gewichtete Summe der bestimmten Abstände ($\gamma_t$ - $\lambda$) bestimmt und als Ergebnis ($Y_t$) bereitgestellt wird.

3. Verfahren nach Anspruch 2, **dadurch gekennzeichnet, dass** der gewichtete Abstand wie folgt bestimmt wird:

$$\gamma_t = \begin{cases} \left(\dfrac{y_t - \lambda}{\lambda}\right)^\beta & wenn\ y_t \geq \lambda \\ -\left(\dfrac{y_t - \lambda}{1 - \lambda}\right)^\beta & sonst \end{cases}$$

wobei das Ergebnis $Y_t$ des Filters (8) wie folgt bestimmt wird:

$$Y_t = \sum_{i=0}^{T} \frac{\gamma_{t-i}}{T}$$

wobei $y_t$ die ausgegebene Wahrscheinlichkeit in [0,1] für das Vorliegen des Hands-Off-Zustands ist,

wobei $T$ die Anzahl Zeitschritte im betrachteten Filterfenster bezeichnet,

wobei $\lambda$ den vorgegebenen Wahrscheinlichkeitsschwellwert bezeichnet,

wobei $\beta$ eine Gewichtung mit bezeichnet.

4. Verfahren nach einem der vorangegangenen Ansprüche, **dadurch gekennzeichnet, dass** zum Erkennen des Hands-Off-Zustands (6) ein Ergebnis ($Y_t$) des Filters (8) mit einem vorgegebenen Erkennungsschwellwert ($\tau$) verglichen wird, wobei der Hands-Off-Zustand (6) als vorliegend erkannt wird, wenn das Ergebnis ($Y_t$) den vorgegebenen Erkennungsschwellwert ($\tau$) erreicht oder überschreitet.

5. Verfahren nach Anspruch 4, **dadurch gekennzeichnet, dass** der vorgegebene Erkennungsschwellwert ($\tau$) ausgehend von einem aktuellen Kontext (40) festgelegt und/oder ausgewählt wird.

6. Verfahren nach einem der vorangegangenen Ansprüche, **dadurch gekennzeichnet, dass** die Parameter (40) in Abhängigkeit von einem aktuell vorliegenden Hands-Off-Zustand (6) gewählt werden.

7. Verfahren nach einem der vorangegangenen Ansprüche, **dadurch gekennzeichnet, dass** im Rahmen des Kontextes (45) ein Eingriffszustand eines Assistenzsystems des Fahrzeugs (50) und/oder eine Funktion des Assistenzsystems des Fahrzeugs (50) berücksichtigt wird.

8. Verfahren nach einem der vorangegangenen Ansprüche, **dadurch gekennzeichnet, dass** der Kontext (45) ein Fahrerprofil umfasst.

9. Verfahren nach einem der vorangegangenen Ansprüche, **dadurch gekennzeichnet, dass** eine Art und/oder eine Filterfunktion des parametrierbaren Filters (8) ausgehend von dem aktuellen Kontext (45) festgelegt und/oder ausgewählt werden.

10. Vorrichtung (1) zum Erkennen eines Hands-Off-Zustands (6) an einem Lenkrad (51) eines Fahrzeugs (50), umfassend:

mindestens einen Lenkungsgrößensensor (2), der eingerichtet ist zum Erfassen von mindestens einer Lenkungsgröße (4) an dem Lenkrad (51), und
eine Datenverarbeitungseinrichtung (3), wobei die Datenverarbeitungseinrichtung (3) dazu eingerichtet ist, die erfasste mindestens eine Lenkungsgröße (4) zu erhalten, ein trainiertes Maschinenlernmodell (5) bereitzustellen und die erfasste mindestens eine Lenkungsgröße (4) dem trainierten Maschinenlernmodell (5) als Eingangsdaten (10) zuzuführen, wobei das Maschinenlernmodell (5) darauf trainiert ist, einen Hands-Off-Zustand (6) ausgehend von zumindest der erfassten mindestens einen Lenkungsgröße (4) zu erkennen und eine zugehörig geschätzte Wahrscheinlichkeit ($y_t$) als Ausgangsdaten (20) auszugeben,
ferner die ausgegebene Wahrscheinlichkeit ($y_t$) über eine vorgegebene Anzahl von Zeitschritten mittels eines parametrierbaren Filters (8) zu filtern und ein Ergebnis ($Y_t$) als Zustandsgröße (30) für den Hands-Off-Zustand (6) auszugeben, und
Parameter (40) des parametrierbaren Filters (8) ausgehend von einem aktuellen Kontext (45) festzulegen und/oder auszuwählen.

**Fig. 1**

Fig. 2

Fig. 3

Fig. 4

**Fig. 1**

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PYEON HYEONGOO ET AL: "Deep Learning-Based Driver's Hands on/off Prediction System Using In-Vehicle Data", SENSORS, Bd. 23, Nr. 3, 28. Januar 2023 (2023-01-28), Seite 1442, XP093253019, CH ISSN: 1424-8220, DOI: 10.3390/s23031442 | 1,10 | INV. B60W50/00 B60W40/08 |
| Y | * Seiten 1,5,8; Tabellen 2,3 * | 1,2,5-7, 9,10 | |
| A | | 3,8 | |
| | ----- | | |
| Y | US 2021/055426 A1 (BANSAL JAYANT [CA] ET AL) 25. Februar 2021 (2021-02-25) | 1,2,5-7, 9,10 | |
| A | * Absätze [0008] - [0013], [0020], [0035], [0036] * | 3,8 | |
| | ----- | | |
| A | DE 10 2008 042277 A1 (BOSCH GMBH ROBERT [DE]) 8. April 2010 (2010-04-08) * das ganze Dokument * | 1-10 | |
| | ----- | | RECHERCHIERTE SACHGEBIETE (IPC) |
| A | DE 10 2010 033744 A1 (VOLKSWAGEN AG [DE]) 16. Mai 2012 (2012-05-16) * das ganze Dokument * | 1-10 | B60W |
| | ----- | | |

Der vorliegende Recherchenbericht wurde für alle Patentansprüche erstellt

| Recherchenort | Abschlußdatum der Recherche | Prüfer |
|---|---|---|
| München | 4. November 2025 | Bak, Maciej |

**EP 4 671 074 A1**

## ANHANG ZUM EUROPÄISCHEN RECHERCHENBERICHT
## ÜBER DIE EUROPÄISCHE PATENTANMELDUNG NR.

EP 25 18 4100

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-11-2025

| Im Recherchenbericht angeführtes Patentdokument | Datum der Veröffentlichung | Mitglied(er) der Patentfamilie | Datum der Veröffentlichung |
|---|---|---|---|
| US 2021055426 A1 | 25-02-2021 | CN 112406861 A<br>US 2021055426 A1 | 26-02-2021<br>25-02-2021 |
| DE 102008042277 A1 | 08-04-2010 | KEINE | |
| DE 102010033744 A1 | 16-05-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019211016 A1